Europäisches Patentamt

European Patent Office

Office européen des brevets

(11) Publication number: **0 445 311 A1**

(19)

# EUROPEAN PATENT APPLICATION

(21) Application number: **90103919.8**

(22) Date of filing: **28.02.90**

(51) Int. Cl.⁵: **B21D 43/28, B21D 43/12**

(43) Date of publication of application:
**11.09.91 Bulletin 91/37**

(84) Designated Contracting States:
**BE DE ES FR GB**

(71) Applicant: **S.I.M.A.C S.p.A.**
**Via Udine**
**I-33017 TARCENTO (Udine)(IT)**

(72) Inventor: **Sclippa, Ferruccio**
**c/o S.I.M.A.C. S.p.A., Via Udine**
**IT-33017 Tarcento (UD)(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) **A bar bundling plant with transfer improved system.**

(57) A transfer bar plant particularly downwards of a rolling plant (A, Li, Cv, Cr), comprising at least a bar transverse plane transfer cooling bed/plaque (Pl), in whic the plant further comprises:

- in exit (downwards) of said transverse plane transfer cooling bed/plaque (Pl), first longitudinal chain or continuous tape bar transfer means (2), having support transverse protruding endowed jutting means (3) to receive one or more bars (b) to advance the bars longitudinally;
- cutting means to cut said bar/s at a predetermined length (Ca);
- downwards said cutting means (Ca), a second longitudinal continuous chain or tape bar transfer means (2) having support transverse protruding endowed jutting means (3) to receive one or more bars (b'), to advance the bars longitudinally;
- in side of said second longitudinal continuous chain or tape transfer means (2) having support transverse protruding endowed jutting means (3), a bar transverse transfer means (4, 4'- 5) to transfer the bars in a bundling (packing) station (S) is placed. (Fig .1)

FIG.1

The present invention has for object a bar bundling plant with transfer improved system.

The innovation finds particular even if not exclusive application in rolling plants.

In prior art transfer bar bundling systems downwards a rolling plant to obtain in final phase a tailored bar package are well known. One of the principal drawbacks of these plants derives by the transfer system of the bars that as known shall be moved from longitudinal direction to transverse direction and viceversa that makes difficult and complex the respective transporter system. Furthermore the actual roll transfer ways are very loud.

Purpose of the present invention is to obviate the mentioned drawbacks and to make more functional the plant.

This and other purposes are reached with the present invention as claimed, solving the exposed problems by means of a transfer bar plant particularly downwards of a rolling plant, comprising at least a bar transverse plane transfer cooling bed/plaque, the plant further comprising:

- in exit (downwards) of said transverse plane transfer cooling bed/plaque, first longitudinal continuous endless chain or tape bar transfer means, having support transverse protruding endowed jutting means to receive one or more bars to advance the bars longitudinally;
- cutting means to cut said bar/s at a predetermined length;
- downwards said cutting means, a second longitudinal continuous chain or tape bar transfer means having support transverse protruding endowed jutting means to receive one or more bars, to advance the bars longitudinally;
- in side of said second longitudinal continuous endless chain or tape transfer means having support transverse protruding endowed jutting means, a bar transverse transfer means to transfer the bars in a bundling (packing) station is placed.

In such a way the transfer system is greatly simplified allowing even a notable compacting of the plant because the adoption of lateral protruding jut supports as a plurality of cantilevers transversally linked to the endless tape of chain makes possible the formation of the bars layer directly on them and with the means electromagnetic assistance, to hold in position the bars layer previously formed, during the advancement, the cutting to predetermined length and its transfer to the bar bundling packing unit.

Advantageously said support transverse protruding endowed jutting means of said longitudinal continuous chain or tape bar transfer means are spaced apart transverse supporting arms protruding laterally as a plurality of transverse parallel spaced apart cantilevers.. With such a solution the rolling noisy is completely eliminated.

These and other advantages will appear from the successive specified preferential solutions of realization with the help of the accompanying drawings which particulars of execution are not to be considered limitative but exemplificative solely.

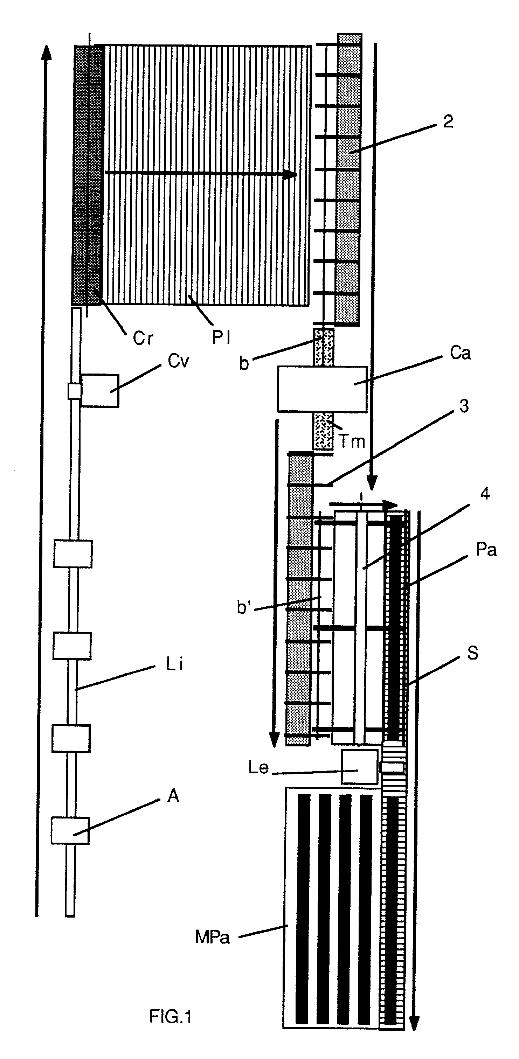

Figure 1 represents a plan schematic view of plant in conformity with the invention.

Figure 2 represents a section transverse schematic view of the endless cantilever transporter in association with one solution of rotating bundling package transfer means.

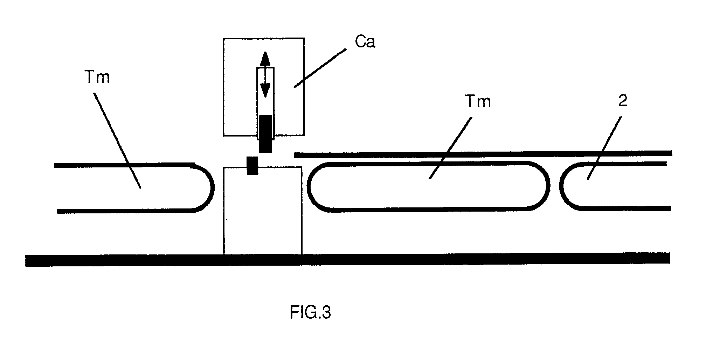

Figure 3 represents a frontal schematic view of the bar stratum advancing line interesting the shear group with upwards and downwards magnetic transporters .

The figures discloses that the plant includes:
- a cages rolling series (L) along a rolling line (Li);
- at least a shearing means (Cv);
- a rotary or oscillating or other equivalent system bar receiving channel (Cr) to receive and to brake the bars in longitudinal advancement and discharging them in
- a cooling bed/plaque (Pl) involving transverse transfer means of the bars in cooling (b).

In exit of said cooling bed/plaque or plane bar transverse transfer is provided:
- first longitudinal continuous endless chain or tape bar transfer means (2), having support transverse protruding endowed jutting means as a cantilevers (3) to receive a predetermined number of bars (b) and advancing them longitudinally in a layer already prearranged for the bar bundling/packing by well known bundling/packing means the prearranging bar layer means comprising well known bar count means and formation bar layer means (not illustrated);
- cutting means to cut said bar/s at a predetermined length (Ca) in association with endless chain or tape, endowed with electromagnet holding bar means (Tm), the respective electromagnets being in operating transfer excited upwardly the shearing means (Ca) and disexcited downwardly said shearing means (Ca), with the purposes to make stop the advancement of the bars formed layer preventing the displacement of the bars during the cut;
- downwards said cutting means (Ca), a second longitudinal continuous endless chain or tape bar transfer means (2) having support transverse protruding endowed jutting means (3) to receive one or more bars (b '), to advance the bars longitudinally;
- in side of said second longitudinal continuous endless chain or tape transfer means (2) , transfer means (4) a packing area (S) is provided; in which is provided bundling means (Le) of the packages bars realized and
- storage means of the bundled packages.

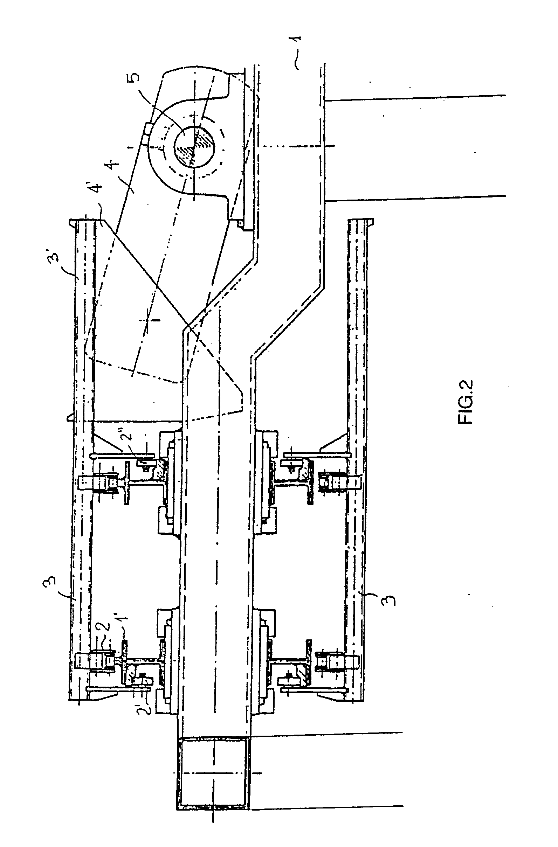

The transporter system (2) with cantilever (3), provides at example (as indicated in Fig. 2), a bringing structure (1 on which are provided the rails (1') where scroll a endless chain (2) to which are secured a plurality of transverse parallel spaced apart cantilevers (3) protruding laterally (3') for the supporting and advancing longitudinally of a bar stratum.
The transverse cantilevers are born by counterrolls in rail (2', 2'').

In the packing transfer zone (S) is provided a layer bar transferer with rotary arm (4) with lateral axis (5) and having bar bringing means (4') that can even also electromagnetic to prevent the displacement of the in transfer bar layer during the transfer to the bundling/packing holdall area (S).

## Claims

1. A transfer bar plant particularly downwards of a rolling plant (A, Li, Cv, Cr), comprising at least a bar transverse plane transfer cooling bed/plaque (Pl), characterized in that the plant further comprises:
   - in exit (downwards) of said transverse plane transfer cooling bed/plaque (Pl), first longitudinal continuous endless chain or tape bar transfer means (2), having support transverse protruding endowed jutting means (3) to receive one or more bars (b) to advance the bars longitudinally;
   - cutting means to cut said bar/s at a predetermined length (Ca);
   - downwards said cutting means (Ca), a second longitudinal continuous endless chain or tape bar transfer means (2) having support transverse protruding endowed jutting means (3) to receive one or more bars (b'), to advance the bars longitudinally;
   - in side of said second longitudinal continuous endless chain or tape transfer means (2) having support transverse protruding endowed jutting means (3), a bar transverse transfer means (4, 4'-5) to transfer the bars in a bundling (packing) station (S) is placed.

2. A plant as claimed in claim 1., characterized in that said support transverse protruding endowed jutting means (3) of said longitudinal continuous chain or tape bar transfer means (2) are spaced apart transverse supporting arms protruding laterally as a plurality of transverse parallel spaced apart cantilevers.

3. A plant as claimed in claim 1., characterized in that said shearing means (Ca) includes upwards and downwards the shearing means (Ca), a continuous endless transfer chain or tape with electromagnet bar holding means (Tm), the respective electromagnets being in operating transfer excited upwardly the shearing means (Ca) and disexcited downwardly said shearing means (Ca).

4. A plant as claimed in claim 1., characterized in that upwards said first longitudinal chain or continuous tape bar transfer means (2), having support transverse protruding endowed jutting means (3), and in association with them, are provided bar counting means further comprising bar single stratum means in the number of bars predisposed to be displaced as a further bar stratum in the bundling packaging unit (S) .

FIG.1

FIG.2

EP 0 445 311 A1

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-2 026 973  (FRIEDRICH KOCKS GMBH)<br>* page 3, line 122 - page 4, line 17 *<br>— — — | 1,2,4 | B 21 D 43/28<br>B 21 D 43/12 |
| Y | PATENT ABSTRACTS OF JAPAN vol. 10, no. 114 (M-473)(2171) 26 April 1986,<br>& JP-A-60 242127 (KOBE SEIKOSHO K.K.) 2 December 1985,<br>* the whole document *<br>— — — | 1,2,4 | |
| Y | PATENT ABSTRACTS OF JAPAN vol. 9, no. 70 (M-367)(1793) 30 March 1985,<br>& JP-A-59 201716 (TAIHEI KINZOKU K.K.) 15 November 1984,<br>* the whole document *<br>— — — | 1,2,4 | |
| A | FR-A-2 071 737  (PAUL PEDDINGHAUS)<br>* claim 1 *<br>— — — | 3 | |
| A | US-A-4 755 948  (M. SHOJI)<br>* column 5, lines 16 - 25 *<br>— — — | 4 | |
| A | FR-A-2 343 549  (KEURO MASCHINENBAU GMBH)<br>— — — — — | | TECHNICAL FIELDS SEARCHED (Int. Cl.5)<br><br>B 21 D<br>B 65 G<br>B 23 D |

The present search report has been drawn up for all claims

| Place of search | Date of completion of search | Examiner |
|---|---|---|
| The Hague | 30 October 90 | KORTH C-F.F.A. |

CATEGORY OF CITED DOCUMENTS
X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document